## Europäisches Patentamt

## European Patent Office

(11) Numéro de publication: **0 102 269**
**B1**

## Office européen des brevets

(12) # FASCICULE DE BREVET EUROPÉEN

(45) Date de publication du fascicule du brevet:
**17.12.86**

(51) Int. Cl.⁴: **C 08 J 3/06,** C 08 L 33/26,
C 08 L 5/00, E 21 B 43/25

(21) Numéro de dépôt: **83401509.1**

(22) Date de dépôt: **22.07.83**

(54) Suspensions concentrées pompables de polymères hydrosolubles.

(30) Priorité: **30.07.82 FR 8213318**

(43) Date de publication de la demande:
**07.03.84 Bulletin 84/10**

(45) Mention de la délivrance du brevet:
**17.12.86 Bulletin 86/51**

(84) Etats contractants désignés:
**AT DE FR GB SE**

(56) Documents cité:
**FR-A-2 176 014**
**US-A-3 402 137**
**US-A-3 637 564**

**Le dossier contient des informations techniques présentées postérieurement au dépôt de la demande et ne figurant pas dans le présent fascicule.**

(73) Titulaire: **RHONE- POULENC SPECIALITES CHIMIQUES, "Les Miroirs" 18, Avenue d'Alsace, F-92400 Courbevoie (FR)**

(72) Inventeur: **Peignier, Michel, 88 rue Yves Le Coz, F-78000 Versailles (FR)**
Inventeur: **Renault, Claude, 3 rue du Cosquies, F-29217 Le Conquet (FR)**

(74) Mandataire: **Tavernier, Colette, RHONE- POULENC INTERSERVICES Service Brevets Chimie 25, Quai Paul Doumer, F-92408 Courbevoie Cédex (FR)**

EP 0 102 269 B1

## 0 102 269

**Description**

La présente invention concerne des suspensions concentrées et pompables de polymères solubles dans l'eau, leur préparation et leur utilisation pour l'épaississement des milieux aqueux.

Les polymères organiques synthétiques et naturels solubles ou dispersables dans l'eau et qui par solubilisation ou dispersion dans l'eau présentent des propriétés épaississantes et floculantes sont largement utilisés dans l'industrie dans des domaines d'application variés comme le bâtiment, la peinture, le papier, le textile, les cosmétiques, l'industrie alimentaire, le traitement des eaux, le phytosanitaire, le forage et la récupération assistée du pétrole.

Pour de nombreuses applications, ces polymères ou hydrocolloïdes doivent être mis sous la forme d'une solution ou dispersion aqueuse faiblement concentrée. Il est connu que l'inconvénient majeur de la plupart des poudres de polymères hydrosolubles est leur difficulté à se dissoudre rapidement sans moyen d'agitation à effet de cisaillement élevé. Sous l'effet d'une hydratation trop rapide, les particules de polymère au contact de l'eau gonflent et ont tendance à former des grumeaux résultant de l'agglomération des particules. Ces grumeaux, entourés d'un mince film gélifié en surface, se désagrègent et se dissolvent difficilement.

Pour faciliter la dissolution des polymères hydrosolubles du type polyacrylamides, on a proposé des compositions en poudre contenant des dispersants solides (US-A- 3 402 137) ainsi que des émulsions eau-dans-huile que l'on inverse par addition d'eau contenant un agent tensio-actif (par exemple US-A- 3 624 019). Cependant, ces émulsions sont peu stables et tendent à se séparer en deux phases au stockage.

On a également proposé des suspensions à concentration plus ou moins élevée en polymère. Des formulations de ce type ont été décrites dans US-A- 3 763 071, 3.894.880 et 4 176 107.

Le but essentiel de l'invention est de fournir des compositions à base de polymères hydrosolubles sous forme de suspensions concentrées qui sont stables au stockage jusqu'à environ 50°C, qui sont pompables et facilement utilisables dans une installation industrielle et qui soient aisément dispersables dans l'eau sans appareillage sophistiqué.

Conformément à l'invention les suspensions comprennent un polymère hydrosoluble particulaire, au moins un agent tensio-actif soluble dans l'eau et de l'eau en quantité inférieure à 30 % en poids par rapport au mélange.

Par polymère hydrosoluble on entend tout polymère susceptible d'être solvaté ou dispersé dans un système aqueux et qui, par solvatation ou dispersion, procure des propriétés épaississantes ou floculantes. Le terme polymère hydrosoluble inclut les polymères synthétiques, les gommes naturelles, les gommes naturelles modifiées et leurs mélanges.

Les polymères synthétiques hydrosolubles sont décrits dans la littérature. On peut se référer par exemple à l'ouvrage "Water-soluble Resins" de Davidson et Sitting - Reinhold Book Corp. 1968. Dans cette classe de polymères on préfère mettre en oeuvre les polymères et copolymères du type polyacrylamide et polyméthacrylamide de poids moléculaire élevé et plus particulièrement:
- les homopolymères d'acrylamide;
- les copolymères anioniques dérivés d'un sel d'acide acrylique et d'acrylamide;
- les copolymères cationiques d'acrylamide et d'un monomère cationique comme le chlorure de triméthylammonium-éthylméthacrylate
- les homopolymères cationiques dérivés de monomères cationiques;
- les homopolymères anioniques d'acide acrylique et leurs sels.

Ces homo- er copolymères peuvent être préparés selon les procédés décrits dans FR-A- 2 348 277, 2 428 054 et 2 453 185.

Les polymères naturels hydrosolubles sont également décrits dans la littérature. (Industrial Gums Whistler - 2ème Ed. Academic Press - 1973). On pourra utiliser notamment des gommes naturelles de la famille des galactomannanes comme les gommes de guar, de caroube et de Tara, la gomme arabique, l'algine (alginate de sodium); des gommes naturelles modifiées comme les dérivés cellulosiques par example la carboxyméthylcellulose, les alkyl et hydroxyalkylcelluloses, la carboxyméthylhydroxyéthylcellulose; des dérivés d'amidon obtenus en substituant une proportion de groupements hydroxydes par des groupements acétate hydroxy éthyle, hydroxy propyle, sulfate phosphate. Appartiennent encore à cette catégorie de polymères naturels les polysaccharides d'origine microbienne comme la gomme Xanthane.

Les agents tensio-actifs susceptibles d'être utilisés pour l'obtention des suspensions stables et pompables de l'invention peuvent être de nature anionique, cationique, non-ionique ou amphotère. L'agent tensio-actif doit être soluble dans l'eau et posséder un bon pouvoir mouillant. Sa valeur HLB est égale ou supérieure à 10. Il doir être fluide à température ambiante et inerte vis-à-vis du polymère.

Pour le choix de l'agent tensio-actif on peut se reporter, entre autres, à l'Encyclopedia of Chemical Technology - Kirk Othmer - Vol.19 ou aux ouvrages de la Série Surfactant series édités par Marcel DREKKER: Non-Ionic Surfactants Vol.I, Schick - Cationic Surfactants Vol.IV, Jungerman - Anionic Surfactants vol.VII, Linfield.

Comme agent tensio-actif anionique on peut utiliser par exemple des sels alcalins d'acides carboxyliques, des sulfonates tels que les alcoyl- et/ou aryl-sulfonates, les sulfosuccinates, des sulfates et produits sulfatés comme les alkylsulfates, les alcools sulfatés, les éthers polyglycoliques sulfatés et des dérivés phosphatés comme les alcools éthoxylés phosphatés.

Parmi les agents tensio-actifs cationiques on peut utiliser par exemple des mono-, di- et polyamines

2

éthoxylés, des amides-amines éthoxylés, des sels d'ammonium quaternaire éthoxylés.

Comme agent tensio-actif non ionique on peut faire appel de manière générale à des composés obtenus par condensation d'oxyde d'alcoylène avec un composé organique aliphatique ou alcoylaromatique. Des agents tensio-actifs appropriés sont les alcoylphénols polyoxyéthylénés, les alcools polyoxyéthylénés, les acides gras polyoxyéthylénés, les triglycérides polyoxyéthylénés et les dérivés polyoxyéthylénés et polyoxypropylénés. Parmi cette classe de tensio-actif on donne la préférence aux produits de condensation du nonylphénol et de l'oxyde d'éthylène comportant en moyenne 9 à 16 moles d'oxyde d'éthylène, er aux produits de condensation des alcools aliphatiques en $C_8$-$C_{18}$ avec l'oxyde d'éthylène comportant en moyenne 6 à 15 moles d'oxyde d'éthylène.

Tous ces agents tensio-actifs peuvent être utilisés seuls ou en mélange entre eux. Il est évident que la nature du tensio-actif sera choisie en fonction de la nature du polymère et de l'application spécifique qui est prévue.

Les suspensions que l'on forme conformément à l'invention contiennent de 20 à 75 % en poids environ de polymère. De manière générale, les proportions relatives exprimées en poids entre le polymère er l'agent tensio-actif peuvent être comprises entre environ 20-90/80-10. Ces proportions sont fonction d'une part de la nature et de la granulométrie du polymère, d'autre part, de la viscosité du tensio-actif. Avantageusement, les proportions relatives sont comprises entre 30-70/70-30. Les teneurs préférées sont de 40 à 55 % pour le polymère et 60-45 % pour le tensio-actif.

Outre le polymère et le tensio-actif il est essentiel que la formulation contienne une certaine quantité d'eau. L'eau peut éventuellement être déjà contenue en totalité ou en partie dans le tensio-actif et/ou dans le polymère. Si la quantité d'eau est insuffisante, la suspension se sépare en deux phases. Si la quantité d'eau est trop importante, la suspension devient trop visqueuse. La quantité d'eau utile pourra être déterminée dans chaque cas particulier à l'aide de quelques essais préliminaires en formant un mélange du polymère et de l'agent tensio-actif puis en ajoutant des quantités croissantes d'eau jusqu'a formation d'une suspension stable.

De manière générale, pour obtenir une suspension concentrée, stable et pompable, la quantité d'eau est égale ou inférieure à 30% en poids par rapport au mélange total. Préférentiellement les suspensions contiennent moins de 15 % d'eau par rapport au mélange total et de 5 à 30 % par rapport au polymère.

La préparation des suspensions se fait par mélange des constituants sous agitation modérée pendant quelques minutes. Il est préférable de mélanger d'abord le tensio-actif et l'eau, puis de disperser le polymère en poudre dans ce mélange. Alternativement il est possible de disperser le polymère dans le tensio-actif puis d'ajouter sous agitation la quantité d'eau nécessaire.

Les suspensions conformes à l'invention sont stables au stockage dans un intervalle de températures pouvant aller de -5°C à +50°C. Elles sont très aisément dispersables dans l'eau sous faible agitation, de sorte que le polymère peut être mis sous forme de solutions aqueuses diluées rapidement et sans moyen d'agitation puissant. En outre, la presence de l'agent tensio-actif soluble dans l'eau, en abaissant très sensiblenent la tension superficielle de la solution aqueuse de polymère, apporte un avantage considérable dans un certain nombre d'applications industrielles. Du fait de ces propriétés avantageuses, les suspensions de polymères hydrosolubles de l'invention sont particulièrement appropriées pour être mises en oeuvre sur un champ pétrolifère et pour préparer des solutions aqueuses destinées à la récupération assistée du pétrole.

Les exemples suivants, non limitatifs, sont donnés à titre d'illustration de l'invention.

Dans tous les exemples le mode de préparation de la suspension est le suivant.

Dans un récipient on introduit l'agent tensio-actif et l'eau dans les proportions indiquées. On agite de manière à obtenir une solution homogène. On ajoute ensuite rapidement le polymère en poudre et on malaxe pendant quelques minutes jusqu'à obtention d'un mélange homogène.

Les mesures de viscosité sont effectuées après avoir laissé reposer la suspension pendant 10 minutes.

## Exemple 1

On prépare des suspensions à base de gomme Xanthane et de divers agents tensio-actifs.

La Gomme Xanthane utilisée est commercialisée par la Société RHONE-POULENC sous la marque Rhodopol 23®.

| Dimension des particules | < 200 μm | 77,5 % |
|---|---|---|
| | entre 200-250 | 14 % |
| | < 250 μm | 8,5 % |

Les caractéristiques des tensio-actifs utilisés sont données ci-après:

- <u>Nonylphénol 9 OE</u>: condensat de nonylphénol avec 9 moles d'oxyde d'éthylène (marque commerciale Cémulsol NP9)

- <u>Octylphénol 16 OE</u>: condensation de l'octylphénol avec 16 moles d'oxyde d'éthylène (marque commerciale Cémulsol OP 16)

- <u>Alfol 12-14 9 OE</u>: mélange d'alcools linéaires en $C_{12}$-$C_{14}$ condensés avec 9 moles d'oxyde d'éthylène (marque commerciale Cémulsol L.A 90)

- <u>Alcools OXO, OE-OP</u>: condensat d'oxyde d'éthylène et d'oxyde de propylène sur alcools OXO (Cémulsol FM 53®)

3

- Phosphate nonylphénol 9 OE: sel de potassium de phosphate monoacide de nonylphénol condensé avec 9 moles d'oxyde d'éthylène, contenant 20 % d'eau (Célanol PS 19®).

Les formulations et les résultats des mesures de viscosité et de stabilité des suspensions, sont donnés dans le Tableau I. Pour la formulation les quantités indiquées sont exprimées en grammes de matières. Les formulations 1 et 2 sont données à titre comparatif.

**Tableau I**

| Formulation | 1 | 2 | 3 | 4 | 5 | 6 | 7 | 8 |
|---|---|---|---|---|---|---|---|---|
| Gomme Xanthane | 50 | 50 | 50 | 43 | 47 | 45,5 | 46 | 40 |
| Nonylphénol 9 OE | 50 | | 50 | 57 | 42 | | | |
| Octylphénol 16 OE | | 50 | | | | | | |
| Alfol 12—14 9 OE | | | | | | 45,5 | | |
| Alcool OXO OE, OP | | | | | | | 43 | |
| Phosphate nonylphénol | | | | | | | | 50 |
| Eau | 0 | 0 | 10 | 17 | 11 | 11 | 11 | — |
| Viscosité mPa.s* | 8000 | 19.000 | 16.200 | 7500 | 9500 | 4600 | | 13.700 |
| Stabilité 24 h à 20°C | séd** | bonne | bonne | bonne | bonne | bonne | bonne | bonne |
| 24 h à 50°C | séd** | séd** | bonne | bonne | bonne | bonne | bonne | bonne |

\* Viscosité Brookfield, modèle IVT, 6 tours/min, plongeur n° 4—20°C
\*\* Sédimentation.

**Exemple 2**

On utilise de la gomme Xanthane (Rhodopol 23®) comme polymère et du nonylphénol polyoxyéthyléné (Cémulsol NP9®) comme tensio-actif. On fait varier la concentration du polymère et la teneur en eau de la suspension.

Les résultats des mesures de viscosité sont indiqués dans le Tableau II.

**Tableau II**

| Quantités en g | | | Viscosité de la suspension en mPa.s* |
|---|---|---|---|
| Gomme Xanthane | Tensio-actif | Eau | |
| 25 | 20 | 2 | 20.200 |
| 20 | 20 | 5,5 | 11.400 |
| 16 | 20 | 6 | 13.500 |
| 12 | 20 | 8 | 6.800 |
| 12 | 20 | 9,5 | 20.600 |

\* Viscosimètre Brookfield Modèle LVT - 6 tours/min Plongeur n°4 - à 20°C.
Après 24 heures de repos à température ambiante les valeurs de viscosité n'ont pas évolué.

**Example 3**

Dans cet exemple on met en oeuvre un copolymère d'acide acrylique en d'acrylamide (Flocogil AD 37®), de poids moléculaire 6-8.10[6]. Sa granulométrie est la suivante:

Dimension des particules:    > 500 μm    45 %
400-500 μm    15 %
250- 400 μm    40 %

Caractéristiques des agents tensio-actifs utilisés:
-Amine de coprah 20 OE: amine de coprah condensée avec 20 moles d'oxyde d'éthylène.
-Amine de coprah 10 OE: amine de coprah condensée avec 10 moles d'oxyde d'éthylène.
- Nonylphénol 9 OE: (Cémulsol NP 9®)
Les résultats sont donnés dans le Tableau III. Les formulations 1 et 2 sont données à titre comparatif.

**Tableau III**

| Formulation | 1 | 2 | 3 | 4 |
|---|---|---|---|---|
| Polyacrylamide | 50 | 50 | 50 | 48,2 |
| Amine de coprah 20 OE | 50 | | | |
| Amine de coprah 10 OE | | 50 | 50 | |
| Nonylphénol 9 OE | | | | 48,2 |
| Eau | | | 5 | 3,6 |
| Viscosité en mPa.s* | 10.400 | 3600 | 5700 | 4700 |
| stabilité 24 heures à 50°C | sépara-tion | sépara-tion | bonne | bonne |

* Viscosimètre Brookfield modèle LVT — 6 tours/min —
Plongeur n°4 à 20°C.

**Example 4**

On prépare des suspensions en utilisant les gommes naturelles suivantes:
- Alginate de sodium
- gomme guar: marque commerciale Vidogum GH 75®
- carboxyméthylcellulose: marque commerciale Blanose 7L2®
Comme tensio-actif on utilise un condensat d'oxyde d'éthylène et d'oxyde de propylène sur alcool OXO (Cémulsol FM 53®).
Les formulations et les mesures de viscosité des suspensions sont indiquées dans le tableu IV. Les quantités sont exprimées en grammes de produit.

**Tableau IV**

| Polymère | Poids en g | Tensio-actif poids en g | Eau poids en g | Viscosité mPa.s* |
|---|---|---|---|---|
| alginate de sodium | 43 | 45,15 | 11.85 | 6.200 |
| gomme guar | 43,5 | 50 | 6,5 | 5.900 |
| carboxyméthyl-cellulose | 50 | 42 | 8 | 7.100 |

* Viscosité Brookfield Modèle LVT - 6 tours/min
Plongeur n°4 — à 20°C.

**0 102 269**

**Revendications**

1) Suspensions concentrées pompables de polymères hydrosolubles caractérisées en ce qu'elles contiennent 20 à 75 % en poids d'un polymère hydrosoluble particulaire, au moins un agent tensio-actif soluble dans l'eau et de l'eau en quantité inférieure à 30 % en poids par rapport au mélange total.

2) Suspensions selon la revendication 1, caractérisées en ce qu'elles comprennent le polymère et l'agent tensio-actif dans les proportions relatives, exprimées en poids, comprises entre 20-90/80-10, de préférence entre 30-70/70-30.

3) Suspensions selon la revendication 2, caractérisées en ce que les proportions relatives polymère/tensio-actif sont comprises entre 40-55/60-45.

4) Suspensions selon l'une des revendications 1 à 3, caractérisées en ce que la teneur en eau est inférieure à 15 % en poids du mélange.

5) Suspensions selon l'une des revendications 1 à 4, caractérisées en ce que le polymère hydrosoluble est choisi dans le groupe des homopolymères et copolymères du type polyacrylamide et polyméthacrylamide.

6) Suspensions selon l'une quelconque des revendications 1 à 4, caractérisées en ce que le polymère hydrosoluble est une gomme naturelle ou une gomme naturelle modifiée.

7) Suspensions selon la revendication 6, caractérisées en ce que la gomme naturelle est un polysaccharide d'origine microbienne.

8) Suspensions selon la revendication 7, caractérisées en ce que le polysaccharide est la gomme xanthane.

9) Suspensions selon l'une des revendications 1 à 8, caractérisées par le fait que le tensio-actif est non-ionique.

10) Suspensions selon la revendication 9, caractérisées par le fait que le tensio-actif est choisi parmi les alcools aliphatiques polyoxyéthylénés et les alcoyl-phénols polyoxyéthylénés.

11) Suspensions selon l'une des revendications 1 à 8, caractérisées par le fait que l'agent tensio-actif est anionique.

12) Suspensions selon l'une des revendications 1 à 8, caractérisées par le fait que l'agent tensio-actif est cationique.

13) Utilisation des suspensions selon l'une des revendications 1 à 12 pour la préparation de solutions aqueuses destinées à la récupération assistée du pétrole.

**Patentansprüche**

1. Pumpfähige konzentrierte Suspensionen von wasserlöslichen Polymeren, dadurch gekennzeichnet, daß sie 20 bis 75 Gew.-% eines teilchenförmigen wasserlöslichen Polymeren, mindestens in wasserlösliches grenzflächenaktives Mittel sowie Wasser in einer Menge von weniger als 30 Gew.-%, bezogen auf das Gesamtgemisch, enthalten.

2. Suspensionen nach Anspruch 1, dadurch gekennzeichnet, daß sie das Polymer und das grenzflächenaktive Mittel in relativen Gewichtsanteilen von 20-90/80-10, vorzugsweise von 30-70/70-30 enthalten.

3. Suspensionen nach Anspruch 2, dadurch gekennzeichnet, daß die relativen Mengenanteile von Polymer zu grenzflächenaktivem Mittel 40-55/60-45 betragen.

4. Suspensionen nach einem der Ansprüche 1 bis 3, dadurch gekennzeichnet, daß der Wassergehalt weniger als 15 Gew.-% des Gemisches ausmacht.

5. Suspensionen nach einem der Ansprüche 2 bis 4, dadurch gekennzeichnet, daß das wasserlösliche Polymer aus der Gruppe der Homopolymeren und Copolymeren vom Typ Polyacrylamid und Polymethacrylamid ausgewählt wird.

6. Suspensionen nach einem der Ansprüche 1 bis 4, dadurch gekennzeichnet, daß das wasserlösliche Polymer ein Naturgummi oder ein modifizierter Naturgummi ist.

7. Suspensionen nach Anspruch 6, dadurch gekennzeichnet, daß der Naturgummi ein Polysaccharid mikrobieller Herkunft ist.

8. Suspensionen nach Anspruch 7, dadurch gekennzeichnet, daß das Polysaccharid Xanthangummi ist.

9. Suspensionen nach einem der Ansprüche 1 bis 8, dadurch gekennzeichnet, daß das grenzflächenaktive Mittel nicht-ionisch ist.

10. Suspensionen nach Anspruch 9, dadurch gekennzeichnet, daß das grenzflächenaktive Mittel unter den Kondensationsprodukten von Ethylenoxid mit aliphatischen Alkoholen oder mit Alkylphenolen ausgewählt wird.

11. Suspensionen nach einem der Ansprüche 1 bis 8, dadurch gekennzeichnet, daß das grenzflächenaktive Mittel anionisch ist.

12. Suspensionen nach einem der Ansprüche 1 bis 8, dadurch gekennzeichnet, daß das grenzflächenaktive Mittel kationisch ist.

13. Verwendung der Suspensionen nach einem der Ansprüche 1 bis 12 zur Herstellung von wäßrigen Lösungen, die für die sekundäre bzw. tertiäre Ausbeutung von Erdöllagerstätten bestimmt sind.

6

**Claims**

1. Pumpable concentrated suspensions of water-soluble polymers, characterized in that they contain 20 to 75% by weight of a particulate water-soluble polymer, at least one water-soluble surface-active agent and water in a quantity of less than 30% by weight based on the total mixture.

2. Suspensions according to Claim 1, characterized in that they comprise the polymer and the surface-active agent in relative proportions, expressed by weight, of between 20-90/80-10, preferably between 30-70/70-30.

3. Suspensions according to Claim 2, characterized in that the relative polymer/surfactant proportions are between 40-55/60-45.

4. Suspensions according to one of Claims 1 to 3, characterized in that the water content is less than 15% by weight of the mixture.

5. Suspensions according to one of Claims 1 to 4, characterized in that the water-soluble polymer is chosen from the group of homopolymers and copolymers of the polyacrylamide and polymethacrylamide type.

6. Suspensions according to any one of Claims 1 to 4, characterized in that the water-soluble polymer is a natural gum or a modified natural gum.

7. Suspensions according to Claim 6, characterized in that the natural gum is a polysaccharide of microbial origin.

8. Suspensions according to Claim 7, characterized in that the polysaccharide is xanthan gum.

9. Suspensions according to one of Claims 1 to 8, characterized in that the surface-active agent is nonionic.

10. Suspensions according to Claim 9, characterized in that the surfactant is chosen from polyoxyethylenated aliphatic alcohols and polyoxyethylenated alkylphenols.

11. Suspensions according to one of Claims 1 to 8, characterized in that the surface-active agent is anionic.

12. Suspensions according to one of Claims 1 to 8, characterized in that the surface-active agent is cationic.

13. Use of the suspensions according to one of Claims 1 to 12 for the preparation of aqueous solutions intended for enhanced oil recovery.